# EUROPEAN PATENT APPLICATION

(11) **EP 4 794 368 A1**
(43) Date of publication of application: **19.08.2026**
(21) Application number: 24890113.4
(22) Date of filing: 26.06.2024
(51) Int. Cl.: H04W 16/20

(54) **CROSS-POLARIZED LEAKY CABLE COMMUNICATION COVERAGE SYSTEM**

(30) Priority: 15.11.2023 CN 202311517344
(71) Applicant: Zhongtian Radio Frequency Cable Co., Ltd, Nantong, Jiangsu 226009 (CN); Jiangsu Zhongtian Technology Co., Ltd., Nantong, Jiangsu 226463 (CN)
(72) Inventor: LIN, Longlong, Nantong, Jiangsu 226009 (CN); XU, Binbin, Nantong, Jiangsu 226009 (CN); ZHAO, Ruijing, Nantong, Jiangsu 226009 (CN); ZHAO, Yunkun, Nantong, Jiangsu 226009 (CN); ZHANG, Jiafeng, Nantong, Jiangsu 226009 (CN); XU, Zongming, Nantong, Jiangsu 226009 (CN)
(74) Representative: Lanchava, Bakuri
(86) International application number: PCT/CN2024/101575
(87) International publication number: WO 2025/102744

(57) **Abstract**

The present application relates to the technical field of wireless communications, and provides a cross-polarized leaky cable communication coverage system, comprising a transparent-transmission POI capable of achieving transparent transmission of signals having a low working frequency and reducing the number of low-frequency-band signal sources, thereby lowering the construction investment and achieving the purposes of reducing the construction cost, shortening a construction period, improving the construction safety and reducing the maintenance difficulty. In addition, a cross-polarized leaky cable group signaled between a conventional POI and a transparent-transmission POI which are adjacent to each other is provided. On one hand, the installation space of leaky cables is reduced, and a space is provided for the arrangement of more leaky cables; and on the other hand, the cross-polarized leaky cables reduce the coherence of signals, form a channel condition beneficial to multi-stream signal transmission, improve the access number of users, and improve the communication quality.

## Description

### Technical Field

The present application relates to technical field of wireless communication, and in particular to a cross-polarized leaky cable communication coverage system.

### Background Art

In a narrow and enclosed indoor environment, network coverage is generally achieved through deployment of leaky cables. And in 5G communication, multiple input multiple output (MIMO) is an extremely important technology that can greatly improve channel capacity, with a plurality of antennas being used in the transmission terminal and the receiving terminal to form a transmission system with a plurality of channels between the transmission terminal and receiving terminal. At present, multiple leaky cables are used to achieve MIMO. However, since four leaky cables are polarized in the same way, the MIMO capacity will be seriously affected if the spacing between the leaky cables does not meet the spatial isolation requirements.

In addition, the existing leaky cable communication systems in narrow areas such as subways, high-speed railways, and highways may have situations of weak coverage of high-frequency signals and over coverage of low-frequency signals due to wide compatible frequencies with large span of the leaky cables, wherein for the low-frequency band, the transmission loss is small and there is a large surplus.

### Summary of the Invention

In view of this, an object of the present application is to provide a cross-polarized leaky cable communication coverage system.

In a first aspect, the present application provides a cross-polarized leaky cable communication coverage system comprising a conventional POI and a transparent transmission POI that are arranged at intervals, and a cross-polarized leaky cable group signal-connected between the conventional POI and the transparent transmission POI which are adjacent to each other, the cross-polarized leaky cable group includes at least two leaky cables arranged side by side and every two adjacent leaky cables have different radiation polarization directions; the transparent transmission POI is not injected with signals having frequencies below 1700MHz, and the transparent transmission POI can directly output the signals having frequencies below 1700MHz received from the cross-polarized leaky cable group in the previous stage to the cross-polarized leaky cable group in the next stage.

In some embodiments, the radiation polarization directions of each leaky cable in the cross-polarized leaky cable group are arranged alternately in horizontal polarization and vertical polarization.

In some embodiments, the radiation polarization direction of each leaky cable in the cross-polarized leaky cable group is vertical polarization, horizontal polarization, +45° polarization, or -45° polarization.

In some embodiments, the periodic settings of slotted holes of each leaky cable in the cross-polarized leaky cable group are not exactly the same.

In some embodiments, at least two differently polarized slotted hole groups are provided on one leaky cable in the cross-polarized leaky cable group, and the differently polarized slotted hole groups are arranged at intervals; the slotted hole groups at the same longitudinal position of any two adjacent leaky cables in the cross-polarized leaky cable group have different polarization modes; two differently polarized slotted hole group that are adjacent to each other in the same leaky cable have a transmission loss difference of no more than 3dB/100m, a coupling loss difference of no more than 5dB, and a radiation system loss of no more than 7dB.

In some embodiments, the conventional POI includes a first different-frequency combiner, a second different-frequency combiner, a first bridge, a first output port, and a second output port, input terminals of the first different-frequency combiner and the second different-frequency combiner are connected to a signal source to be combined, output terminals of the first different-frequency combiner and the second different-frequency combiner are connected to the first bridge, and the first bridge is connected to the first output port and the second output port; the transparent transmission POI includes a third different-frequency combiner, a fourth different-frequency combiner, a second bridge, a first terminal combiner, a second terminal combiner, a third output port and a fourth output port, input terminals of the third different-frequency combiner and the fourth different-frequency combiner are connected to a signal source with a frequency greater than 1700 MHz, output terminals of the third different-frequency combiner and the fourth different-frequency combiner are connected to the second bridge; the first output terminal of the second bridge is connected to the first terminal combiner, the second output terminal of the second bridge is connected to the second terminal combiner, both the first terminal combiner and the second terminal combiner include a low-frequency terminal, the low-frequency terminal of the first terminal combiner is connected to the low-frequency terminal of the second terminal combiner; the output terminal of the first terminal combiner is connected to the third output port, and the output terminal of the second terminal combiner is connected to the fourth output port.

In some embodiments, both the conventional POI and the transparent transmission POI include different-frequency combiners, a bridge, a terminal combiner and output ports, the different-frequency combiner is connected between 2G/3G/4G signal source to be combined and the bridge, the terminal combiner is connected between the bridge and the output ports, and 5G signal source is directly connected to the input terminal of the terminal combiner.

In some embodiments, the terminal combiner in the transparent transmission POI is provided with an input terminal for receiving signals with frequencies below 1700 MHz, and the input terminals for receiving signals with frequencies below 1,700 MHz of two terminal combiners are connected by jumper wires.

In some embodiments, the terminal combiner in the transparent transmission POI includes a first input port, a second input port, a third input port, a fourth input port, and a transparent transmission combined output port, the first input port is configured for input of source signal in the frequency band of 2,515-2,675MHz, the second input port is configured for input of source signal in the frequency band of 3,300-3,700MHz, the third input port is configured for input of source signal in the frequency band below 1,700MHz, the fourth input port is configured for input of source signal in the frequency band of 1,710-2,370 MHz, and the transparent transmission combined output port is configured to output a combined signal of the input signals of the first input port, the second input port, the third input port and the fourth input port.

In some embodiments, the terminal combiner in the conventional POI includes a fifth input port, a sixth input port, a seventh input port, and a conventional combined output port, the fifth input port is configured for input of source signal in the frequency band of 2,515-2,675MHz, the sixth input port is configured for input of source signal in the frequency band of 3,300-3,700MHz, the seventh input port is configured for input of source signal in the frequency band of 820-2,370MHz, and the conventional combined output port is configured to output a combined signal of the input signals of the fifth input port, the sixth input port and the seventh input port.

The beneficial effects achieved by the present application:
The present application provides a cross-polarized leaky cable communication coverage system which comprises the transparent transmission POI and is capable of transparently transmitting signals in frequency bands with lower operating frequencies, in particular, below 1700MHz (such as 2G signals), and reducing the number of low-frequency signal sources, thereby reducing construction investment, achieving the purpose of saving construction costs, shortening construction periods, improving construction safety, and reducing maintenance difficulties. In addition, by providing cross-polarized leaky cable group signal-connected between the conventional POI and the transparent transmission POI which are adjacent to each other, on the one hand installation space for leaky cables is saved, providing space for arranging more leaky cables, and on the other hand, the cross-polarized leaky cables reduce signal coherence, form channel conditions conducive to multi-stream signal transmission, increase the number of access users and improve communication quality.

In order to make the above objects, features, and advantages of the present application more obvious and understandable, preferred embodiments are presented in the following and are described in detail in conjunction with the accompanying drawings.

### Description of Drawings

In order to more clearly illustrate the technical solution of embodiments of the present application, hereunder the accompanying drawings required to be used in embodiments will be briefly introduced. It should be understood that the following accompanying drawings only show some embodiments of the present application and should not be considered as limitation on the scope. Those of ordinary skills in the art can obtain other related drawings based on these drawings without expending creative work.
FIG. 1 shows a schematic diagram of the network structure of a cross-polarized leaky cable communication coverage system of the present application;
FIG. 2 shows a schematic diagram of the cross polarization of two leaky cables of the cross-polarized leaky cable communication coverage system of the present application;
FIG. 3 shows a schematic diagram of the cross polarization of four leaky cables of the cross-polarized leaky cable communication coverage system of the present application;
FIG. 4 shows a schematic diagram of the structures with different leaky cable periods of the cross-polarized leaky cable communication coverage system of the present application;
FIG. 5 shows a schematic structural diagram of one leaky cable of the cross-polarized leaky cable communication coverage system of the present application, said one leaky cable being provided with multiple slotted hole groups that are differently polarized,;
FIG. 6 shows a schematic diagram of the principle of the 9-band conventional POI of the cross-polarized leaky cable communication coverage system of the present application;
FIG. 7 shows a schematic diagram of the principle of the 9-band transparent transmission POI of the cross-polarized leaky cable communication coverage system of the present application;
FIG. 8 shows a schematic diagram of principle of a 5G conventional POI of the cross-polarized leaky cable communication coverage system of the present application;
FIG. 9 shows a schematic structural diagram of a terminal combiner in the conventional POI of the cross-polarized leaky cable communication coverage system of the present application;
FIG. 10 shows a schematic diagram of the principle of 5G transparent transmission POI of the cross-polarized leaky cable communication coverage system of the present application; and
FIG. 11 shows a schematic structural diagram of a terminal combiner in the transparent transmission POI of the cross-polarized leaky cable communication coverage system of the present application.

In the figures: 1 - first conventional POI; 2 - a first transparent transmission POI; 3 - third conventional POI; 4 - first cross-polarized leaky cable group; 5 - second cross-polarized leaky cable group; 6 - first leaky cable; 7 - second leaky cable; 8 - third leaky cable; 9 - fourth leaky cable; P1 - first period; P2 - second period; P3 - third period; P4 - fourth period; 10 - 9-band conventional POI; 11 - first different-frequency combiner; 12 - second different-frequency combiner; 13 - first bridge; 14 - 9-band transparent transmission POI; 15 - third different-frequency combiner; 16 - fourth different-frequency combiner; 17 - second bridge; 18 - first terminal combiner; 19 - second terminal combiner; ANT1 - first signal terminal; ANT2 - second signal terminal; 20 -Telecom CDMA800 signal source; 21 - Mobile GSM1800 signal source; 22 - Telecom FDD-LTE (1.8) signal source; 23 - Unicom WCDMA2100 signal source; 24 - Unicom LTE-FDD1.8G signal source or Unicom GSM1800 signal source; 25 - Telecom LTE-FDD2.1G signal source; 26 - Mobile TD-LTE (F-band) signal source; 27 - Mobile TD-LTE (E-band) signal source; 28 - Unicom/Mobile GSM900 signal source; 29- Mobile NR2.6G signal source; 30 - Unicom/Telecom NR3.5G signal source; 31 - fifth different-frequency combiner; 32 - sixth different-frequency combiner; 33 - third bridge; 34 - third terminal combiner; 35 - fourth terminal combiner; 36 - 5G conventional POI; 37 - 5G transparent transmission POI; 38 - seventh different-frequency combiner; 39 - eighth different-frequency combiner; 40 - fourth bridge; 41 - fifth terminal combiner; 42 - sixth terminal combiner; 43 - first input port; 44 - second input port; 45 - third input port; 46 - fourth input port; 47 - transparent transmission combined output port; 48 - fifth input port; 49 - six input port; 50 - seventh input port; 51 - conventional combined output port; 52 - first output port; 53 - second output port; 54 - third output port; 55 - fourth output port.

### Embodiments

The terms "comprising", "including", "containing" or "characterized in that" in the description, claims, and accompanying drawings of the present application have the same meaning and include endpoints or are open-ended, and do not exclude additional elements or method steps that are not recited. "Comprising" is technical term used in the language of the claims, which means that said elements exist, but other elements may also be added and still form a construction or method within the scope of the claims.

It should be noted that similar reference numerals and letters represent similar items in the following accompanying drawings. Therefore, once an item is defined in one figure, it is not necessary to further define and explain the item in the subsequent figures. In addition, the terms such as "first", "second" and "third" etc. are only used for differentiated description and cannot be interpreted as indicating or implying relative importance. The term "about" in the present application means to include small variations (up to +/-10%) from the stated values.

In the present application, it is found that the existing leaky cable communication systems in narrow areas such as subways, high-speed railways, and highways may have situations such as a weak coverage of high-frequency signals and an over coverage of low-frequency signals due to the wide compatible frequencies with large span of the leaky cables, and for the low-frequency band, the transmission loss is small and there is a large surplus. In addition, in 5G communication, multiple input multiple output (MIMO) is an extremely important technology that can greatly improve channel capacity, and a plurality of antennas are used in the transmission terminal and the receiving terminal to form a transmission system with a plurality of channels between the transmission terminal and the receiving terminal. At present, multiple leaky cables are used to achieve MIMO. However, since four leaky cables adopt the same polarization mode, the MIMO capacity will be seriously affected if the spacing between the leaky cables does not meet the spatial isolation requirements.

Thus, embodiments of the present application provide a cross-polarized leaky cable communication coverage system, which comprises a conventional POI and a transparent transmission POI that are arranged at intervals, and a cross-polarized leaky cable group signal-connected between the conventional POI and the transparent transmission POI which are adjacent to each other, wherein, the cross-polarized leaky cable group includes at least two leaky cables arranged side by side and the two adjacent leaky cables have different radiation polarization directions; the transparent transmission POI is not injected with signals with frequencies below 1,700MHz, and the transparent transmission POI can directly output the signals with frequencies below 1,700MHz received from the cross-polarized leaky cable group in the previous stage to the cross-polarized leaky cable group in the next stage. The communication system in the present embodiment comprises the transparent transmission POI and is capable of transparently transmitting signals in frequency bands with lower operating frequencies, in particular, below 1,700MHz (such as 2G signals), reducing the number of low-frequency signal sources, thereby reducing construction investment, achieving the purpose of saving construction costs, shortening construction periods, improving construction safety, and reducing maintenance difficulties. In addition, by providing cross-polarized leaky cable group signal-connected between the conventional POI and the transparent transmission POI which are adjacent to each other, on the one hand, installation space for leaky cables is saved, providing space for arranging more leaky cables, and on the other hand, the cross-polarized leaky cables reduce signal coherence, form channel conditions conducive to multi-stream signal transmission, increase the number of access users and improve the communication quality.

Hereunder technical solutions in embodiments of the present application will be clearly and fully described in conjunction with the drawings accompanying embodiments of the present application. Obviously, the embodiments as described are a part of embodiments of the present application, not all embodiments. Based on the embodiments in the present application, all other embodiments obtained by those of ordinary skills in the art without expending creative work all fall into the protection scope of the present application.

"Embodiments" referred herein means that the specific features, structures or properties described in conjunction with embodiments may be included in at least one embodiment of the present application. The term appearing in various positions of the description does not necessarily refer to the same embodiment, nor is it an independent or alternative embodiment that is mutually exclusive with other embodiments. Those skilled in the art can explicitly and implicitly understand that the examples described herein can be combined with other embodiments.

### Embodiment1

In a narrow and enclosed indoor environment, network coverage is generally achieved by deploying leaky cables. The leaky cables in network coverage system contain signals of various standards, such as 2G signals (Telecom CDMA800, Mobile/Unicom GSM900, Mobile/Unicom DCS1800, etc.), 3G signals (Mobile TD-SCDMA, Unicom WCDMA, Telecom CDMA2000, etc.), 4G signals (Unicom FDD-LTE (1.8G), Mobile TD-LTE (F), Mobile TD-LTE (E), Mobile TD-LTE (D), Telecom FDD-LTE (1.8G), Telecom FDD-LTE (2.1G), etc.), 5G signals (Mobile NR2.6, Telecom/Unicom NR3.5, etc.). The frequency of each standard signal varies from high to low, and the transmission capacities thereof in the leaky cables are different. In general, the higher the frequency of the signal, the weaker its transmission capacity in the leaky cable, and the shorter the coverage distance. For example, the 5G commercial frequency bands are divided into: Mobile 2,515MHz-2,675MHz, Unicom 3,500MHz-3,600MHz, and Telecom 3,400MHz-3,500MHz. The frequency band used for Mobile's 5G is similar to that used for 4G; compared to the frequency bands occupied by 2G, 3G and 4G, the frequency band occupied by Unicom/Telecom's 5G is significantly higher, resulting in a relatively weaker signal coverage capability.

An RF signal from the signal source is injected into one terminal of the leaky cable, and after transmission attenuation through a certain distance, the signal gradually weakens until it cannot meet the coverage requirements. This distance is the effective coverage distance of the signal source.

For a general signal source, its effective coverage distance L equals to [Pin - (P0+L1+L2+L3+L4+L5)]/S, in meters.

Pin refers to the injection power at the input terminal of the leaky cable; P0 refers to the minimum required coverage signal strength; L1 refers to the coupling loss of the leaky cable, which is related to the operating frequency band; L2 refers to human body fading which is related to the crowding degree in the carriage, and is generally taken as 3-5dB; L3 refers to the width factor, which is generally set as Xlg (d/2), wherein d refers to the distance between the terminal and the leaky cable, X is the coefficient and generally between 10 and 20; L4 refers to the design attenuation allowance, which is generally taken as 3dB; L5 refers to car body loss, which is related to the type of carriage, wherein the car body loss of subway is generally around 8-12dB; S refers to the transmission loss per meter of leaky cable, which is an index of leaky cable and is related to the operating frequency.

From the list of maximum coverage distances (single-sided) for the main network standards in the leaky cable coverage system shown in the table 1 below, it can be seen that on the whole, the signals in low-frequency bands have a strong coverage capability and a long maximum coverage distance, while the signals in the high-frequency bands have a weak coverage capability and a small maximum coverage distance. However, the specific 2G, 3G, 4G, and 5G signal standards have different requirements on the input power, transmission loss, coupling loss, edge field strength of leaky cables, and the maximum coverage distance and frequency as presented are not simply proportional. Overall, 2G signals in low-frequency bands have a maximum coverage distance about 2-3 times that of 3G/4G/5G signals in high-frequency bands.

**Table 1 List of maximum coverage distance of the main network standards in the leaky cable coverage system.**

| Network Standard | Frequency Band (downlink/uplink) | Maximum Coverage Distance (m) |
|---|---|---|
| Telecom CDMA800 | 865-880/820-835 | 922 |
| Mobile GSM900 | 934-960/889-915 | 792 |
| Mobile DCS1800 | 1,805-1,830/1,710-1,735 | 784 |
| Unicom DCS1800 | 1,830-1,850/1,735-1,755 | 811 |
| Unicom FDD-LTE(1.8G) | 1,840-1,860/1,745-1,765 | 600 |
| Mobile TD-LTE(F) | 1,885-1,915 | 584 |
| Telecom FDD-LTE(1.8G) | 1,860-1,880/1,765-1,785 | 584 |
| Telecom FDD-LTE(2.1G) | 2,110-2,130/1,920-1,940 | 481 |
| Unicom WCDMA | 2,130-2,155/1,940-1,965 | 488 |
| Mobile TD-LTE(E) | 2,320-2,370 | 404 |
| Mobile TD-LTE(D) | 2,575-2,675 | 403 |
| Mobile NR2.6 | 2,515-2,675 | 424 |
| Telecom and Unicom NR3.5 | 3,400-3,500; 3,500-3,600 | 322 |

In the present application, it has been found that the existing leaky cable communication systems in narrow areas such as subways, high-speed railways, and highways may have situations such as a weak coverage of high-frequency signals and an over coverage of low-frequency signals due to the wide compatible frequencies with large span of the leaky cables, and for the low-frequency band, its transmission loss is small and there is a large surplus. In addition, in 5G communication, multiple input multiple output (MIMO) is an extremely important technology that can greatly improve channel capacity and multiple antennas are used in the transmission terminal and the receiving terminal to form a transmission system with a plurality of channels between the transmission terminal and receiving terminal. At present, multiple leaky cables are used to achieve MIMO. However, since multiple leaky cables adopt the same polarization mode, the MIMO capacity will be seriously affected if the spacing between the leaky cables does not meet the spatial isolation requirements.

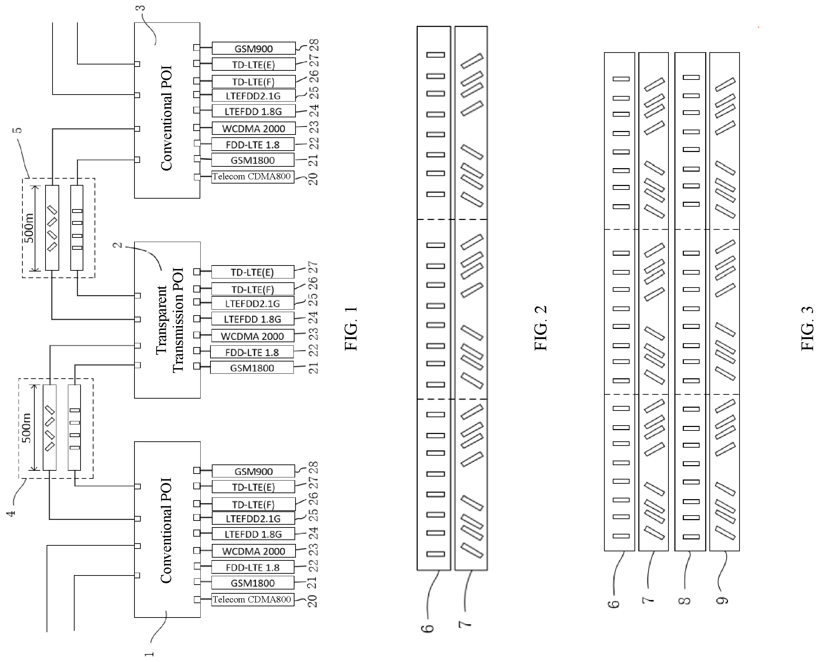

In view of this, the present application provides a cross-polarized leaky cable communication coverage system, which uses POI (Point of Interface) to combine the signal resources at multiple frequency bands and connect the output port of the POI to the leaky cable. As shown in FIG. 1, the cross-polarized leaky cable communication coverage system comprises a conventional POI (Point of Interface), a transparent transmission POI, and a cross-polarized leaky cable group arranged between the conventional POI and the transparent transmission POI. The cross-polarized leaky cable group includes at least two leaky cables arranged side by side and the two adjacent leaky cables have different radiation polarization directions. A first terminal of the leaky cable in the cross-polarized leaky cable group is signal-connected to the conventional POI, and a second terminal of the leaky cable in the cross-polarized leaky cable group is signal-connected to the transparent transmission POI.

As shown in FIG. 1, a first conventional POI1, a first transparent transmission POI2, a second conventional POI3, a first cross-polarized leaky cable group 4 arranged between the first conventional POI1 and the first transparent transmission POI2, and a second cross-polarized leaky cable group 5 arranged between the first transparent transmission POI2 and the second conventional POI3 are included. The first cross-polarized leaky cable group 4 includes at least two leaky cables arranged side by side, and the two adjacent leaky cables have different radiation polarization directions. The first terminal of the first cross-polarized leaky cable group 4 is signal-connected to the first conventional POI1, and the second terminal of the first cross-polarized leaky cable group 4 is signal-connected to the first transparent transmission POI2. The second cross-polarized leaky cable group 5 includes at least two leaky cables arranged side by side, and the two adjacent leaky cables have different radiation polarization directions. The first terminal of the second cross-polarized leaky cable group 5 is signal-connected to the first transparent transmission POI2, and the second terminal of the second cross-polarized leaky cable group 5 is signal-connected to the second conventional POI3. FIG. 1 only schematically show the structure of a section of the cross-polarized leaky cable communication coverage system, in which both the first conventional POI1 and the second conventional POI3 are connected with two cross-polarized leaky cable groups, the conventional POI and the transparent transmission POI are arranged at intervals, and the cross-polarized leaky cable group is signal-connected between the conventional POI and the transparent transmission POI.

In some embodiments, the first cross-polarized leaky cable group 4 or the second cross-polarized leaky cable group 5 may each include two leaky cables to form a 2 × 2 MIMO system.

In some embodiments, the first cross-polarized leaky cable group 4 or the second cross-polarized leaky cable group 5 may each include four leaky cables to form a 4 × 4 MIMO system.

In some embodiments, the first cross-polarized leaky cable group 4 or the second cross-polarized leaky cable group 5 may each include eight leaky cables to form an 8 × 8 MIMO system.

In the specific implementation process, the first cross-polarized leaky cable group 4 or the second cross-polarized leaky cable group 5 may be adjusted according to the signal coverage requirements for environment arrangement, the limitation on arrangement cost, or the space allowance of the arrangement scene, for example, the first cross-polarized leaky cable group 4 or the second cross-polarized leaky cable group 5 may include three leaky cables, five leaky cables, six leaky cables, seven leaky cables, nine leaky cables, ten leaky cables, etc.

In order to construct orthogonal-polarized leaky cables to reduce signal correlation between leaky cables, in some embodiments, the radiation polarization directions of the leaky cables in the first cross-polarized leaky cable group 4 or the second cross-polarized leaky cable group 5 alternate between horizontal polarization and vertical polarization. Taking the 2 × 2 MIMO system as an example, the first cross-polarized leaky cable group 4 or the second cross-polarized leaky cable group 5 both include two leaky cables arranged side by side, namely the first leaky cable 6 and the second leaky cable 7, and the radiation polarization directions of the first leaky cable 6 and the second leaky cable 7 are different. For example, in some embodiments, as shown in FIG. 2, the first leaky cable 6 is a horizontally-polarized leaky cable, and the second leaky cable 7 is a verticallypolarized leaky cable, thereby reducing signal correlation between the leaky cables and reducing the minimum distance between the leaky cables from 4 times the wavelength to 2 times the wavelength. For example, in 1.8GHz frequency band, the minimum distance between two leaky cables that are identically polarized is about 67cm, while the minimum distance between two leaky cables that are differently polarized is about 34 cm; for example, in 2.4 GHz frequency band, the minimum distance between two leaky cables that are identically polarized is about 50cm, while the minimum distance between two leaky cables that are differently polarized is about 25 cm. In this embodiment, the radiation polarization directions of two adjacent leaky cables in the first cross-polarized leaky cable group 4 and the second cross-polarized leaky cable group 5 are different, and alternate between horizontal polarization and vertical polarization, which on the one hand saves the installation space of leaky cables, especially for environments such as subway tunnels where in addition to communication leaky cables, various cables and equipment such as subway-specialized leaky cables, police leaky cables, and optical cable racks need to be installed in the limited installation space of rail transit, and the cables of different wireless communication systems also need a certain installation distance to avoid interference therebetween; and on the other hand, provides space for arranging more leaky cables, thereby increasing the number of access users and improving the communication quality.

In some embodiments, the polarization direction of the leaky cable is not limited to vertical polarization or horizontal polarization. For example, the radiation polarization directions of two adjacent leaky cables in the first cross-polarized leaky cable group 4 and the second cross-polarized leaky cable group 5 may be vertical polarization, horizontal polarization, +45° polarization, -45° polarization, +30° polarization, -30° polarization, +60° polarization, -60° polarization, +70° polarization, or -70° polarization, etc. For example, as shown in FIG. 3, in some examples, taking a 4 × 4 MIMO system as an example, the first cross-polarized leaky cable group 4 or the second cross-polarized leaky cable group 5 each includes four leaky cables arranged side by side, namely the first leaky cable 6, the second leaky cable 7, the third leaky cable 8, and the fourth leaky cable 9, and the radiation polarization directions of the first leaky cable 6, the second leaky cable 7, the third leaky cable 8, and the fourth leaky cable 9 are different. The first leaky cable 6 is a horizontally polarized leaky cable, the second leaky cable 7 is a vertically polarized leaky cable, the third leaky cable 8 is a +45° polarized leaky cable, and the fourth leaky cable 9 is a -45° polarized leaky cable. For example, in some embodiments, the first leaky cable 6 is a horizontally polarized leaky cable, the second leaky cable 7 is a +45° polarized leaky cable, the third leaky cable 8 is a vertically polarized leaky cable and the fourth leaky cable 9 is a -45° polarized leaky cable. For example, in some embodiments, the first leaky cable 6 is a +30° polarized leaky cable, the second leaky cable 7 is a +45° polarized leaky cable, the third leaky cable 8 is a +60° polarized leaky cable, and the fourth leaky cable 9 is a +70° polarized leaky cable. The combination of polarization directions of leaky cables will not be listed one by one herein.

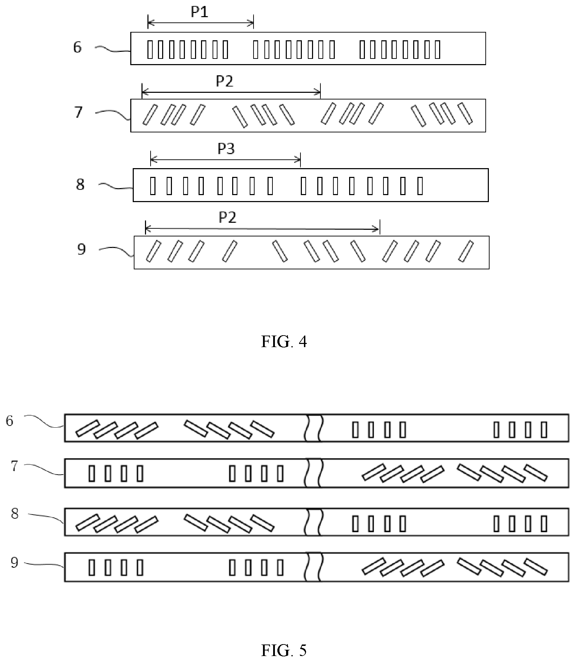

In some embodiments, in order to achieve better isolation degree between leaky cables in the first cross-polarized leaky cable group 4 and the second cross-polarized leaky cable group 5 and reduce interference of radiation signals of the leaky cables, the slotted holes of each leaky cable in the first cross-polarized leaky cable group 4 and the second cross-polarized leaky cable group 5 have different periods, so as to further enhance the signal isolation degree of two leaky cables. For example, if the first leaky cable 6 and the third leaky cable 8 are horizontally polarized, and the second leaky cable 7 and the fourth leaky cable 9 are vertically polarized, the first period P1 of the slotted holes of the first leaky cable 6 and the third period P3 of the slotted holes of the third leaky cable 8 can be set to have a stroke of 80 to 250mm. The second period P2 of the slotted holes of the second leaky cable 7 and the fourth period P4 of the slotted holes of the fourth leaky cable 9 have a stroke of 170 to 270mm. For example, in some embodiments, as shown in FIG. 4, the first period P1 of the slotted holes of the first leaky cable 6 is set as 120mm, the second period P2 of the slotted holes of the second leaky cable 7 is set as 200mm, the third period P3 of the slotted holes of the third leaky cable 8 is set as 170mm, and the fourth period P4 of the slotted holes of the fourth leaky cable 9 is set as 260mm.

In some other embodiments, for easier process implementation and for reducing process complexity, the first period P1 of the slotted holes of the first leaky cable 6 can be set to be the same as the third period P3 of the slotted holes of the third leaky cable 8. The second period P2 of the slotted holes of the second leaky cable 7 is set to be the same as the fourth period P4 of the slotted holes of the fourth leaky cable 9. That is to say, the period of each leaky cable in the cross-polarized leaky cable group may not necessarily be different, the periods of the leaky cables with the same polarization direction may be set to be identical, and the periods of the leaky cables with different polarization directions may be set to be different. In some other embodiments, the periods of the leaky cables with different polarization directions may be set to be identical and the periods of the leaky cables with the same polarization direction may be set to be different. In short, all settings for the periods of slotted holes of leaky cables in the first cross-polarized leaky cable group 4 and the second cross-polarized leaky cable group 5 are not the same. Other possible embodiments that may be included will not be detailed herein.

Due to the difference in handheld ways of user terminals, the reception effect of the cross-polarized leaky cables also varies. In order to ensure the user experience of most customers, in some other embodiments, as shown in FIG. 5, various slotted hole groups with different polarization may be provided on one leaky cable in the first cross-polarized leaky cable group 4 and the second cross-polarized leaky cable group 5, the slotted holes in the same slotted hole group are arranged in sequence in the same radial area along the leaky cable's length direction, and the slotted hole groups with different polarization are arranged at intervals. The periods of the slotted hole groups with different polarization are identical, but for any two adjacent leaky cables in the cross-polarized leaky cable group, the slotted hole groups thereof at the same corresponding longitudinal position have different polarization modes. In order to ensure the effectiveness of cross-polarized leaky cables, the two adjacent slotted hole groups with different polarization on the same leaky cable have a transmission loss difference of no more than 3dB/100m, a coupling loss difference of no more than 5dB, and a radiation system loss of no more than 7dB. For example, as shown in FIG. 5, two slotted hole groups with different polarization are provided on the same leaky cable, the slotted hole groups are arranged at intervals and have the same periods. The first leaky cable 6, the second leaky cable 7, the third leaky cable 8, and fourth leaky cable 9 are all provided with vertically polarized slotted hole group and horizontally polarized slotted hole group which are arranged at intervals, and the slotted hole groups at the same corresponding longitudinal position of any two adjacent leaky cables have different polarization modes.

In some other embodiments of the present application, slotted hole groups with 3, 4, 5, 6 or more different polarization modes may be provided at intervals on the same leaky cable, and the slotted hole groups at the same corresponding longitudinal position of any two adjacent leaky cables in the cross-polarized leaky cable group have different polarization modes. Wherein, for example, the radiation polarization direction may be vertical polarization, horizontal polarization, +45° polarization, -45° polarization, +30° polarization, -30° polarization, +60° polarization, -60° polarization, +70° polarization, or -70° polarization, etc.

The multi-system combining platform Point Of Interface (POI) serves as a bridge for connecting signal source and distribution systems, which is mainly configured for combining downlink signals and splitting uplink signals from various subsystems, while minimizing useless interference components between frequency bands. The first conventional POI1 and the second conventional POI3 described in the present application may be 9-band POI or 12-band POI, etc. Table 2 below shows the list of ports and supported frequency bands of the 9-band conventional POI. Table 3 below shows the list of ports and supported frequency bands of the 12-band conventional POI.

**Table 2 is a list of ports and supported frequency bands of the 9-band conventional POI.**

| Frequency Band | Bandwidth (MHz) | Downlink(MHz) | Uplink(MHz) | Network Standard for the Frequency Band |
|---|---|---|---|---|
| Frequency Band 1 | 2*26 | 934-960 | 889-915 | Mobile/Unicom GSM900 |
| Frequency Band 2 | 2*25 | 1,805-1,830 | 1,710-1,735 | Mobile GSM1800 |
| Frequency Band 3 | 30 | 1,885-1,915 | | Mobile TD-LTE(F-band) |
| Frequency Band 4 | 50 | 2,320-2,370 | | Mobile TD-LTE(E-band) |
| Frequency Band 5 | 2*15 | 865-880 | 820-835 | Telecom CDMA800 |
| Frequency Band 6 | 2*20 | 1,860-1,880 | 1,765-1,785 | Telecom LTE FDD1.8G |
| Frequency Band 7 | 2*20 | 2,110-2,130 | 1,920-1,940 | Telecom LTE FDD2.1G |
| Frequency Band 8 | 2*30 | 1,830-1,860 | 1,735-1,765 | Unicom GSM1800/LTEFDD1.8G |
| Frequency Band 9 | 2*40 | 2,130-2,170 | 1,940-1,980 | Unicom WCDMA2100 |

**Table 3 is a list of ports and supported frequency bands of the 12-band conventional POI.**

| Frequency Band | Bandwidth (MHz) | Downlink(MHz) | Uplink(MHz) | Network Standard for the Frequency Band |
|---|---|---|---|---|
| Frequency Band 1 | 2*26 | 934-960 | 889-915 | Mobile/Unicom GSM900 |
| Frequency Band 2 | 2*25 | 1,805-1,830 | 1,710-1,735 | Mobile GSM1800/LTE-FDD |
| Frequency Band 3 | 30 | 1,885-1,915/2,010-2,025 | | Mobile TD-LTE(F&A bands) |
| Frequency Band 4 | 50 | 2,320-2,370 | | Mobile TD-LTE(E-band) |
| Frequency Band 5 | 160 | 2,515-2,675 | | Mobile TD-LTE/NR2.6G |
| Frequency Band 6 | 2*15 | 865-880 | 820-835 | Telecom CDMA800 |
| Frequency Band 7 | 2*20 | 1,860-1,880 | 1,765-1,785 | Telecom LTE FDD1.8G |
| Frequency Band 8 | 2*20 | 2,110-2,130 | 1,920-1,940 | Telecom LTE FDD2.1G |
| Frequency Band 9 | 400 | 3,300-3,700 | | Telecom/Unicom NR3.5G |
| Frequency Band 10 | 2*50 | 1,830-1,880 | 1,735-1,785 | Unicom/Telecom LTE FDD1.8G |
| Frequency Band 11 | 2*40 | 2,130-2,170 | 1,940-1,980 | Unicom UL2100 |
| Frequency Band 12 | 400 | 3,300-3,700 | | Unicom/Telecom NR3.5G |

The main principle of the first transparent transmission POI2 in the present application is to receive low-frequency signals from the leaky cables in the previous stage, transparently transmit signals through the low-frequency port of the combiner inside the first transparent transmission POI2, and emit the signals to the leaky cables in the next stage for propagation. As shown in FIG. 1, the low-frequency signal of the access point of the first transparent transmission POI2 comes from the fullband access point at both sides, while the high-frequency signal of the access point of the first transparent transmission POI2 still comes from the corresponding signal source injections from communication operators. The use of transparent transmission POI can maximize the coverage capability of low-frequency signal sources and save investment in low-frequency-band signal source equipment. The transparent transmission POI in the present application is not injected with signals with frequencies below 1,700MHz, and said transparent transmission POI can directly output signals with frequencies below 1,700MHz received from the cross-polarized leaky cable group in the previous stage to the cross-polarized leaky cable group in the next stage.

The first transparent transmission POI2 may be 9-band transparent transmission POI, 12-band transparent transmission POI, etc. FIG. 4 below shows the ports and supported frequency band ranges of the 9-band transparent transmission POI. Table 5 shows the ports and supported frequency band ranges of the 12-band transparent transmission POI.

**Table 4 is a list of ports and frequency bands of the 9-band transparent transmission POI.**

| Frequency Band | Bandwidth (MHz) | Downlink(MHz) | Uplink(MHz) | Network Standard for the Frequency Band |
|---|---|---|---|---|
| Frequency Band 1 | 2*26 | 934-960 | 889-915 | Mobile/Unicom GSM900 (Transparent Transmission) |
| Frequency Band 2 | 2*25 | 1,805-1,830 | 1,710-1,735 | Mobile GSM1800 |
| Frequency Band 3 | 30 | 1,885-1,915 | | Mobile TD-LTE(F-band) |
| Frequency Band 4 | 50 | 2,320-2,370 | | Mobile TD-LTE(E-band) |
| Frequency Band 5 | 2*15 | 865-880 | 820-835 | Telecom CDMA800 (Transparent Transmission) |
| Frequency Band 6 | 2*20 | 1,860-1,880 | 1,765-1,785 | Telecom LTE FDD1.8G |
| Frequency Band 7 | 2*20 | 2,110-2,130 | 1,920-1,940 | Telecom LTE FDD2.1G |
| Frequency Band 8 | 2*30 | 1,830-1,860 | 1,735-1,765 | Unicom GSM1800/LTEFDD1.8G |
| Frequency Band 9 | 2*40 | 2,130-2,170 | 1,940-1,980 | Unicom WCDMA2100 |

**Table 5 is a list of ports and supported frequency bands of 12-band transparent transmission POI.**

| Frequency Band | Bandwidth (MHz) | Downlink(MHz) | Uplink(MHz) | Network Standard for the Frequency Band |
|---|---|---|---|---|
| Frequency Band 1 | 2*26 | 934-960 | 889-915 | Mobile/Unicom GSM900 (Transparent Transmission) |
| Frequency Band 2 | 2*25 | 1,805-1,830 | 1,710-1,735 | Mobile GSM1800/LTE-FDD |
| Frequency Band 3 | 30 | 1,885-1,915/2,010-2,025 | | Mobile TD-LTE (F&A Band) |
| Frequency Band 4 | 50 | 2,320-2,370 | | Mobile TD-LTE (E-band) |
| Frequency Band 5 | 160 | 2,515-2,675 | | Mobile TD-LTE/NR2.6G |
| Frequency Band 6 | 2*15 | 865-880 | 820-835 | Telecom CDMA800 (Transparent Transmission) |
| Frequency Band 7 | 2*20 | 1,860-1,880 | 17,65-1,785 | Telecom LTE FDD1.8G |
| Frequency Band 8 | 2*20 | 2,110-2,130 | 1,920-1,940 | Telecom LTE FDD2.1G |
| Frequency Band 9 | 400 | 3,300-3,700 | | Telecom/Unicom NR3.5G |
| Frequency Band 10 | 2*50 | 1,830-1,880 | 1,735-1,785 | Unicom/Telecom LTEFDD1.8G |
| Frequency Band 11 | 2*40 | 2,130-2,170 | 1,940-1,980 | Unicom UL2100 |
| Frequency Band 12 | 400 | 3,300-3,700 | | Unicom/Telecom NR3.5G |

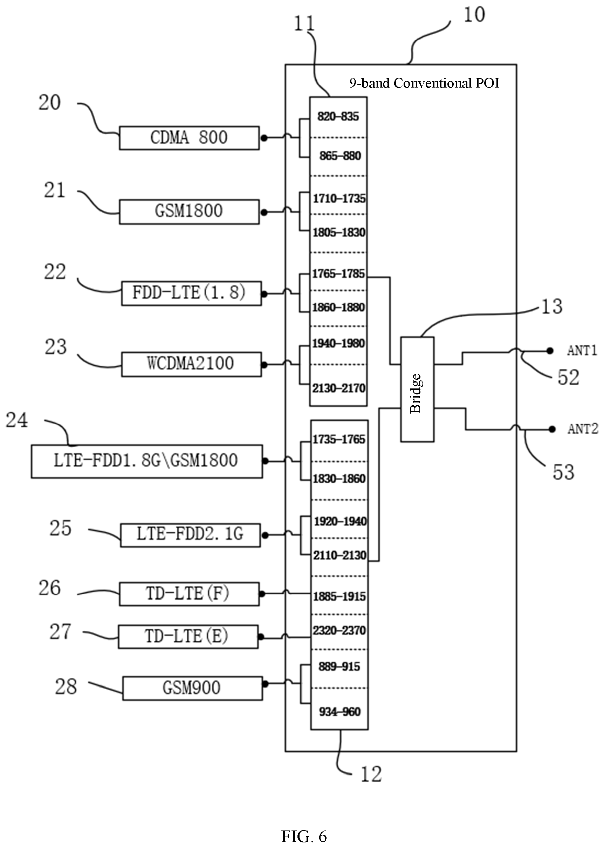

FIG. 6 shows a schematic diagram of structure and principle of the 9-band conventional POI. The 9-band conventional POI includes a first different-frequency combiner 11, a second different-frequency combiner 12, a first bridge 13, a first output port 52, and a second output port 53. Signal sources with different frequency bands in different standards are connected to the first different-frequency combiner 11 or the second different-frequency combiner 12, and the first different-frequency combiner 11 and the second different-frequency combiner 12 are connected to the first bridge 13. There are signal sources with different frequency bands in different standards, such as Telecom CDMA800 signal source 20, Mobile GSM1800 signal source 21, Telecom FDD-LTE (1.8) signal source 22, Unicom WCDMA2100 signal source 23, Unicom LTE-FDD1.8G signal source or Unicom GSM1800 signal source 24, Telecom LTE-FDD2.1G signal source 25, Mobile TD-LTE (F-band) signal source 26, Mobile TD-LTE (E-band) signal source 27, and Unicom/Mobile GSM900 signal source 28. Input terminals of the first different-frequency combiner 11 and the second different-frequency combiner 12 are connected to the signal sources to be combined, signals from the signal sources with different frequency bands are respectively combined by the first different-frequency combiner 11 and the second different-frequency combiner 12 to form a first combined signal and a second combined signal. Output terminals of the first different-frequency combiner 11 and the second different-frequency combiner 12 are connected to the first bridge 13, through which the first combined signal and the second combined signal are combined for output. The first bridge 13 is connected to the first output port 52 and the second output port 53 so as to be connected with the leaky cables via the output ports. As shown in FIG. 6, ANT1 is a first signal terminal connected to the leaky cable in the previous stage, and ANT2 is a second signal terminal connected to the leaky cable in the next stage.

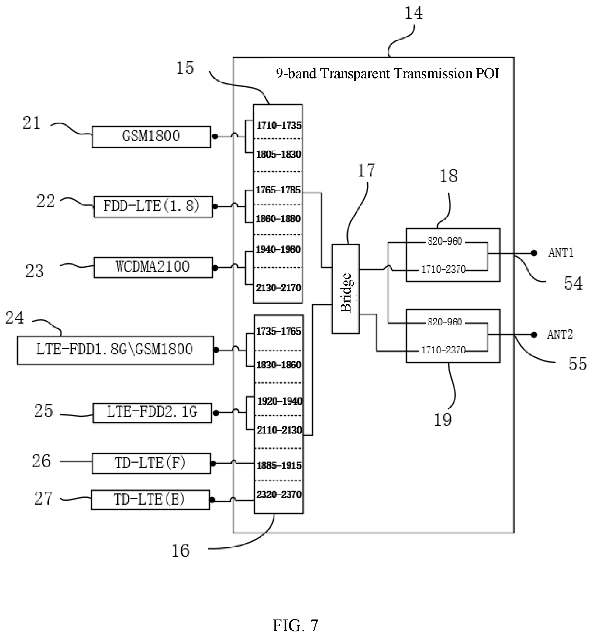

FIG. 7 shows a schematic diagram of structure and principle of the 9-band transparent transmission POI. The 9-band transparent transmission POI 14 includes a third different-frequency combiner 15, a fourth different-frequency combiner 16, a second bridge 17, a first terminal combiner 18, a second terminal combiner 19, a third output port 54, and a fourth output port 55. The high-frequency signal source is connected to the third different-frequency combiner 15 or the fourth different-frequency combiner 16, input terminals of the third different-frequency combiner 15 and the fourth different-frequency combiner 16 are connected to a signal source with a frequency greater than 1,700 MHz, and the combined output terminals of the third different-frequency combiner 15 and the fourth different-frequency combiner 16 are connected to the second bridge 17. The first output terminal of the second bridge 17 is connected to the first terminal combiner 18, and the second output terminal of the second bridge 17 is connected to the second terminal combiner 19. The first terminal combiner 18 and the second terminal combiner 19 both include a low-frequency terminal, a high-frequency input terminal and an output terminal. The high-frequency input terminals of the first terminal combiner 18 and the second terminal combiner 19 are both connected to the high-frequency combined output of the second bridge 17. The low-frequency terminal of the first terminal combiner 18 is connected to the low-frequency terminal of the second terminal combiner 19. The output terminal of the first terminal combiner 18 is connected to the third output port 54, and the output terminal of the second terminal combiner 19 is connected to the fourth output port 55. The output terminal of the first terminal combiner 18 is connected to the first signal terminal ANT1, and the output terminal of the second terminal combiner 19 is connected to the second signal terminal ANT2. The first signal terminal ANT1 is connected to the leaky cable in the previous stage, and the second signal terminal ANT2 is connected to the leaky cable in the next stage. There are high-frequency signal sources, for example, Mobile GSM1800 signal source 21, Telecom FDD-LTE (1.8) signal source 22, Unicom WCDMA2100 signal source 23, Unicom LTE-FDD1.8G signal source or Unicom GSM1800 signal source 24, Telecom LTE-FDD2.1G signal source 25, Mobile TD-LTE (F-band) signal source 26, Mobile TD-LTE (E-band) signal source 27. Multiple signals from high frequency signal sources in different frequency bands are respectively combined by the third different-frequency combiner 15 and the fourth different-frequency combiner 16 to form a third combined signal and a fourth combined signal, which are combined by the second bridge 17 and then output into the high-frequency input terminal of the first terminal combiner 18 and the high-frequency input terminal of the second terminal combiner 19. The low-frequency signal from the first signal terminal ANT1 is transmitted through the output terminal of the first terminal combiner 18 to the interior of the first terminal combiner 18, and then transmitted through the low-frequency terminal of the first terminal combiner 18 to the low-frequency terminal of the second terminal combiner 19, so as to be combined with the high-frequency signal from the high-frequency input terminal of the second bridge 17 and output, achieving the transparent transmission of the low-frequency signal.

The first conventional POI1, the second conventional POI3, and the first transparent transmission POI2 in the present application can also be customized according to the frequency band of the signal source. For example, in some embodiments, the signal sources are respectively: Telecom CDMA800 signal source 20, Mobile GSM1800 signal source 21, Telecom FDD-LTE (1.8) signal source 22, Unicom WCDMA2100 signal source 23, Unicom LTE-FDD1.8G signal source or Unicom GSM1800 signal source 24, Telecom LTE-FDD2.1G signal source 25, Mobile TD-LTE (F-band) signal source 26, Mobile TD-LTE (E-band) signal source 27, Unicom/Mobile GSM900 signal source 28, Mobile NR2.6G signal source 29, and Unicom/Telecom NR3.5G signal source 30. Among them, the frequency bands of 865-880 MHz (downlink)/820-835 MHz (uplink) of China Telecom CDMA800 and the frequency bands of 934-960 MHz (downlink)/889-915 MHz (uplink) of China Unicom/Mobile GSM900 have better coverage advantages compared with the high-frequency bands of other signal sources, and the maximum coverage distance on one side thereof is about 2-3 times that of other frequency bands. The transparent transmission POI can be used to achieve transparent transmission of Telecom CDMA800 signals and Unicom/Mobile GSM900 signals, exerting the coverage capability of the low-frequency signal source, and reducing the number of the signal source equipment of Telecom CDMA800 and the signal source equipment of Unicom/Mobile GSM900, thereby reducing construction investment, achieving the goal of saving construction costs, shortening construction cycles, improving construction security, and reducing maintenance difficulties.

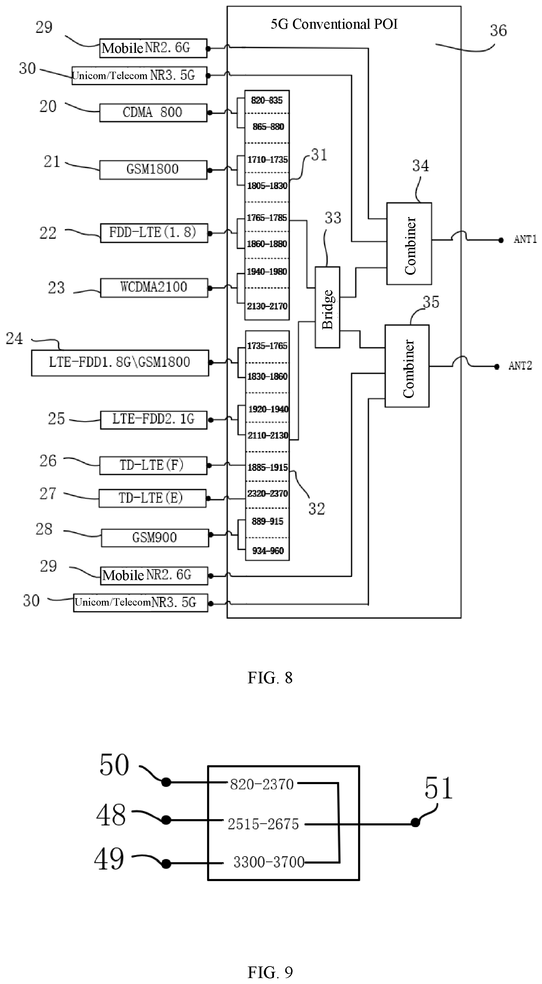

In this embodiment, both the conventional POI and the transparent transmission POI are designed to include a different-frequency combiner, a bridge, a terminal combiner and an output port, wherein the different-frequency combiner is connected between the 2G/3G/4G signal sources to be combined and the bridge, the terminal combiner is connected between the bridge and the output port, the input terminal of the terminal combiner is also connected with a 5G signal source. FIG. 8 shows a schematic diagram of structure and principle of a 5G conventional POI 36, wherein Telecom CDMA800 signal source 20, Mobile GSM1800 signal source 21, Telecom FDD-LTE (1.8) signal source 22, and Unicom WCDMA2100 signal source 23 are signal-connected to the fifth different-frequency combiner 31 of the 5G conventional POI 36. Unicom LTE-FDD1.8G signal source or Unicom GSM1800 signal source 24, Telecom LTE-FDD2.1G signal source 25, Mobile TD-LTE (F-band) signal source 26, Mobile TD-LTE (E-band) signal source 27, and Unicom/Mobile GSM900 signal source 28 are signal-connected to the sixth different-frequency combiner 32 of the 5G conventional POI 36. The above-mentioned signal sources can be, for example, RRU (Radio Remote Unit) devices. The combined output terminal of the fifth different-frequency combiner 31 and the combined output terminal of the sixth different-frequency combiner 32 are both connected to the third bridge 33. The first output terminal of the third bridge 33 as well as the Mobile NR2.6G signal source 29 and the Unicom/Telecom NR3.5G signal source 30 are all connected to the input terminal of the third terminal combiner 34, and the output terminal of the third terminal combiner 34 is connected to the first signal terminal ANT1. The second output terminal of the third bridge 33 as well as the Mobile NR2.6G signal source 29 and Unicom/Telecom NR3.5G signal source 30 are all connected to the input terminal of the fourth terminal combiner 35, and the output terminal of the fourth terminal combiner 35 is connected to the second signal terminal ANT2.

As shown in FIG. 9, the terminal combiner in the conventional POI includes a fifth input port 48, a sixth input port 49, a seventh input port 50, and a conventional combined output port 51. The fifth input port 48 is used for input of signals from signal source with frequency band of 2,515-2,675 MHz, the sixth input port 49 is used for input of signals from signal source with frequency band of 3,300-3,700 MHz, the seventh input port 50 is used for input of signals from signal source with frequency band of 820-2,370 MHz. The conventional combined output port 51 is configured to output the combined signal of the input signals of the fifth input port 48, the sixth input port 49, and the seventh input port 50. The conventional combined output port 51 is connected to the first signal terminal ANT1 (or the second signal terminal ANT2) of the conventional POI.

In the 5G conventional POI 36, 2G/3G/4G signal sources are connected to the fifth different-frequency combiner 31 and the sixth different-frequency combiner 32, the first different-frequency combined signal generated by the fifth different-frequency combiner 31 and the second different-frequency combined signal generated by the sixth different-frequency combiner 32 are input into the third bridge 33 for combination and then output to the third terminal combiners 34 and the fourth terminal combiners 35. The combined signal output from the third bridge 33 and the 5G signal input from the Mobile NR2.6G signal source 29 and the Unicom/Telecom NR3.5G signal source 30 are combined by the third terminal combiners 34 and then output to the first signal terminal ANT1. The combined signal output from the third bridge 33 and the 5G signal input from the Mobile NR2.6G signal source 29 and the Unicom/Telecom NR3.5G signal source 30 are combined by the fourth terminal combiners 35 and then output to the second signal terminal ANT2.

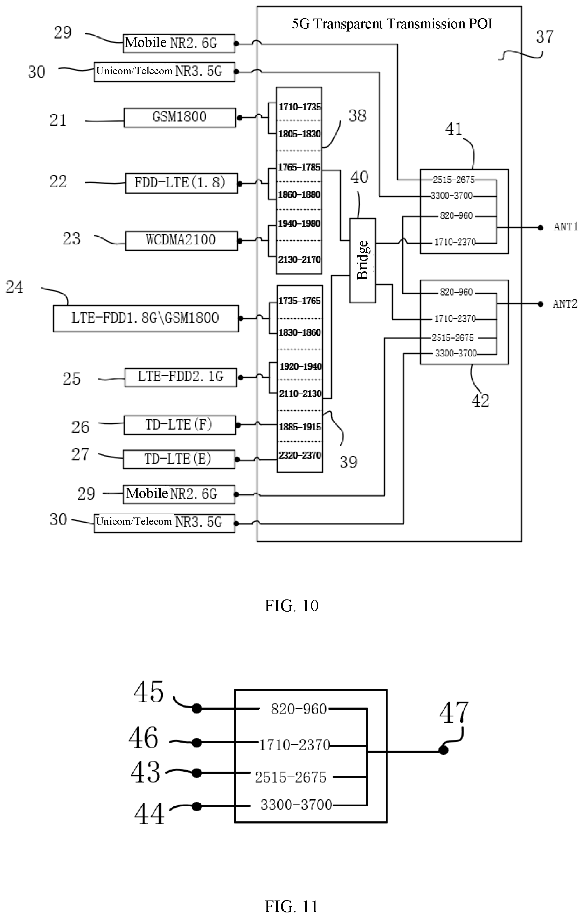

FIG. 10 shows a schematic diagram of structure and principle of 5G transparent transmission POI 37, wherein, Mobile GSM1800 signal source 21, Telecom FDD-LTE (1.8) signal source 22 and Unicom WCDMA2100 signal source 23 are signal-connected to the seventh different-frequency combiner 38 of 5G transparent transmission POI 37. Unicom LTE-FDD1.8G signal source or Unicom GSM1800 signal source 24, Telecom LTE-FDD2.1G signal source 25, Mobile TD-LTE (F-band) signal source 26, and Mobile TD-LTE (E-band) signal source 27 are signal-connected to the eighth different-frequency combiner 39 of 5G conventional POI 36. The above-mentioned signal sources can be, for example, RRU (Radio Remote Unit) devices. The combined output terminals of the seventh different-frequency combiner 38 and the combined output terminals of the eighth different-frequency combiner 39 are both connected to the fourth bridge 40. The first output terminal of the fourth bridge 40 as well as the Mobile NR2.6G signal source 29 and Unicom/Telecom NR3.5G signal source 30 are all connected to the input terminal of the fifth terminal combiner 41. The output terminal of the fifth terminal combiner 41 is connected to the first signal terminal ANT1. The second output terminal of the fourth bridge 40 as well as Mobile NR2.6G signal source 29 and Unicom/Telecom NR3.5G signal source 30 are all connected to the input terminal of the sixth terminal combiner 42, and the output terminal of the sixth terminal combiner 42 is connected to the second signal terminal ANT2. The fifth terminal combiner 41 and the sixth terminal combiner 42 both have low-frequency terminals, and the low-frequency terminal of the fifth terminal combiner 41 is connected to the low-frequency terminal of the sixth terminal combiner 42. In this embodiment, the terminal combiner in the transparent transmission POI is provided with an input terminal for signals with a frequency below 1,700 MHz, namely a low-frequency terminal, and the input terminals for signals with a frequency below 1,700 MHz of the two terminal combiners are connected via jumper wires.

As shown in FIG. 11, the terminal combiner in the transparent transmission POI includes a first input port 43, a second input port 44, a third input port 45, a fourth input port 46, and a transparent transmission combined output port 47. The first input port 43 is used for input of signals from signal source in the frequency band of 2,515-2,675 MHz, the second input port 44 is configured for input of signals from signal source in the frequency band of 3,300-3,700 MHz, the third input port 45 is used for input of signals in the frequency band below 1,700 MHz, and the fourth input port 46 is used for input of signals from signal source in the frequency band of 1,710-2,370 MHz. The transparent transmission combined output port 47 is configured to output the combined signal of the input signals of the first input port 43, the second input port 44, the third input port 45, and the fourth input port 46. The third input port 45 of the two terminal combiners in the transparent transmission POI is the low-frequency terminal, the third input ports 45 of the two terminal combiners in the transparent transmission POI are connected via jumper wires. The transparent transmission combined output port 47 is connected to the first signal terminal ANT1 (or the second signal terminal ANT2) of the transparent transmission POI.

The high-frequency signal sources in 5G transparent transmission POI 37 are signal-connected to the seventh different-frequency combiner 38 and the eighth different-frequency combiner 39, the third different-frequency combined signal generated by the seventh different-frequency combiner 38 and the fourth different-frequency combined signal generated by the eighth different-frequency combiner 39 are input into the fourth bridge 40 for combination and then output to the fifth terminal combiners 41 and the sixth terminal combiners 42. The combined signal output from the fourth bridge 40, the low-frequency signal from the first signal terminal ANT1 and the 5G signal input from the Mobile NR2.6G signal source 29 and the Unicom/Telecom NR3.5G signal source 30 are combined by the fifth terminal combiners 41 and then output to the first signal terminal ANT1. The combined signal output from the fourth bridge 40, the low-frequency signal from the low-frequency terminal of the fifth terminal combiner 41 and the 5G signal input from the Mobile NR2.6G signal source 29 and the Unicom/Telecom NR3.5G signal source 30 are combined by the sixth terminal combiners 42 and then output to the second signal terminal ANT2. The low-frequency signal from the first signal terminal ANT1 is transmitted to the interior of the fifth terminal combiners 41 through the output terminal of the fifth terminal combiners 41, and then transmitted to the low-frequency terminal of the sixth terminal combiners 42 through the low-frequency terminal of the fifth terminal combiners 41 for combination with the high-frequency signal from the high-frequency input terminal of the fourth bridge 40 as well as 5G signals input from Mobile NR2.6G signal source 29 and Unicom/Telecom NR3.5G signal source 30 and then output, so as to achieve transparent transmission of low-frequency signals.

In the conventional POI and transparent transmission POI described in the above embodiments of the present application, it is considered that the attenuation degree of 5G frequency bands (Mobile NR2.6, Telecom/Unicom NR3.5) during propagation thereof in cables (such as leaky cables) is much greater than that of signals in other frequency bands, and the method for combining the high-frequency signal and the low-frequency signal in the same stage in the existing POI cannot solve the impact of different loss differences on the coverage quality of high-frequency signal and low-frequency signal during propagation. In the embodiments of the present application, access with low insertion loss for 5G-band can be achieved by adding terminal combiners, such as the third terminal combiner 34, the fourth terminal combiner 35, the fifth terminal combiner 41, and the sixth terminal combiner 42 as shown in Figs. 8-9, and the insertion loss for 5G bands can be reduced from 5.5dB to about 1dB, namely, combination insertion loss of signals in 5G bands can be reduced, so as to meet the requirements of the network system for combination insertion loss, and improve the coverage capability of the combined signals in 5G bands.

The embodiments of the present application provide a cross-polarized leaky cable communication coverage system, which comprises the transparent transmission POI capable of transparently transmitting 2G signals with lower operating frequencies, reducing the number of low-frequency signal sources, thereby reducing construction investment, achieving the purpose of saving construction costs, shortening construction periods, improving construction safety, and reducing maintenance difficulties. In addition, the cross-polarized leaky cable group signal-connected between adjacent conventional POI and transparent transmission POI is provided, which on the one hand saves installation space for leaky cables and provides space for arranging more leaky cables, and on the other hand, the cross-polarized leaky cables of which reduce signal coherence, forming channel conditions conducive to multi-stream signal transmission, increasing the number of access users and improving communication quality.

The above provides a detailed introduction to the embodiments of the present application. The principle and embodiments of the present application have been set forth by utilizing specific embodiments herein, and the description of the above embodiments is simply for better understanding of the method of the present application and the core concept thereof. Meanwhile, for those of ordinary skills in the art, changes can be made to the specific embodiments and the application scope according to the ideas of the present application. In summary, contents of the description should not be interpreted as limitations on the present application.

## Claims

1. A cross-polarized leaky cable communication coverage system, **characterized in that**, said system comprises a conventional POI and a transparent transmission POI that are arrange at intervals, and a cross-polarized leaky cable group signal-connected between the conventional POI and the transparent transmission POI which are adjacent to each other, the cross-polarized leaky cable group includes at least two leaky cables arranged side by side and the two adjacent leaky cables have different radiation polarization directions;
the transparent transmission POI is not injected with signals having frequencies below 1,700 MHz, and the transparent transmission POI can directly output the signals having frequencies below 1,700 MHz received from the cross-polarized leaky cable group in the previous stage to the cross-polarized leaky cable group in the next stage.

2. The cross-polarized leaky cable communication coverage system according to claim 1, **characterized in that** radiation polarization directions of leaky cables in the cross-polarized leaky cable group alternate in horizontal polarization and vertical polarization.

3. The cross-polarized leaky cable communication coverage system according to claim 1, **characterized in that** radiation polarization direction of each leaky cable in the cross-polarized leaky cable group is vertical polarization, horizontal polarization, +45° polarization, or -45° polarization.

4. The cross-polarized leaky cable communication coverage system according to claim 1, **characterized in that** periodic settings of slotted holes of each leaky cable in the cross-polarized leaky cable group are not exactly the same.

5. The cross-polarized leaky cable communication coverage system according to claim 1, **characterized in that** at least two differently polarized slotted hole groups are provided on one leaky cable in the cross-polarized leaky cable group, and the differently polarized slotted hole groups are arranged at intervals; the slotted hole groups at the same corresponding longitudinal position of any two adjacent leaky cables in the cross-polarized leaky cable group have different polarization modes; two adjacent differently polarized slotted hole groups of the same leaky cable have a transmission loss difference of no more than 3dB/100 meters, a coupling loss difference of no more than 5dB, and a radiation system loss of no more than 7dB.

6. The cross-polarized leaky cable communication coverage system according to claim 1, **characterized in that** the conventional POI includes a first different-frequency combiner, a second different-frequency combiner, a first bridge, a first output port, and a second output port, input terminals of the first different-frequency combiner and the second different-frequency combiner are connected to a signal source to be combined, output terminals of first different-frequency combiner and the second different-frequency combiner are connected to the first bridge, and the first bridge is connected to the first output port and the second output port;
the transparent transmission POI includes a third different-frequency combiner, a fourth different-frequency combiner, a second bridge, a first terminal combiner, a second terminal combiner, a third output port and a fourth output port, input terminals of the third different-frequency combiner and the fourth different-frequency combiner are connected to a signal source with a frequency greater than 1,700 MHz, output terminals of the third different-frequency combiner and the fourth different-frequency combiner are connected to the second bridge; the first output terminal of the second bridge is connected to the first terminal combiner, the second output terminal of the second bridge is connected to the second terminal combiner, both the first terminal combiner and the second terminal combiner include a low-frequency terminal, the low-frequency terminal of the first terminal combiner is connected to the low-frequency terminal of the second terminal combiner; the output terminal of the first terminal combiner is connected to the third output port, and the output terminal of the second terminal combiner is connected to the fourth output port.

7. The cross-polarized leaky cable communication coverage system according to claim 1, **characterized in that** both the conventional POI and the transparent transmission POI include different-frequency combiners, a bridge, a terminal combiner and output ports, the different-frequency combiner is connected between 2G/3G/4G signal source to be combined and the bridge, the terminal combiner is connected between the bridge and the output ports, and 5G signal source is directly connected to the input terminal of the terminal combiner.

8. The cross-polarized leaky cable communication coverage system according to claim 6, **characterized in that** the terminal combiner in the transparent transmission POI is provided with an input terminal for receiving signals with frequencies below 1,700 MHz, and the input terminals for receiving signals with frequencies below 1,700 MHz of two terminal combiners are connected through jumper wires.

9. The cross-polarized leaky cable communication coverage system according to claim 7, **characterized in that** the terminal combiner in the transparent transmission POI includes a first input port, a second input port, a third input port, a fourth input port, and a transparent transmission combined output port, the first input port is used for input of signals from signal source in the frequency band of 2,515-2,675 MHz, the second input port is used for input of signals from signal source in the frequency band of 3,300-3,700 MHz, the third input port is used for input of signals in the frequency band below 1,700MHz, the fourth input port is used for input of signals from signal source in the frequency band of 1,710-2,370 MHz, and the transparent transmission combined output port is configured to output a combined signal of the input signals of the first input port, the second input port, the third input port and the fourth input port.

10. The cross-polarized leaky cable communication coverage system according to claim 7, **characterized in that** the terminal combiner in the conventional POI includes a fifth input port, a sixth input port, a seventh input port, and a conventional combined output port, the fifth input port is used for input of signals from signal source in the frequency band of 2,515-2,675 MHz, the sixth input port is used for input of signals from signal source in the frequency band of 3,300-3,700 MHz, the seventh input port is used for input of signals from signal source in the frequency band of 820-2,370MHz, and the conventional combined output port is configured to output a combined signal of the input signals of the fifth input port, the sixth input port and the seventh input port.
